# EUROPEAN PATENT APPLICATION

(11) **EP 3 549 827 A1**
(43) Date of publication of application: **09.10.2019**
(21) Application number: 18465510.8
(22) Date of filing: 03.04.2018
(51) Int. Cl.: B60R 21/0136, B60N 2/42, B60N 2/427, B60N 2/00

(54) **VEHICLE WITH A ROOF IMPACT SENSOR AND METHOD FOR OPERATING A VEHICLE WITH A ROOF IMPACT SENSOR**

(71) Applicant: Continental Automotive GmbH, 30165 Hannover (DE)
(72) Inventor: Bivolaru, Valentin, 300685 Timisoara (RO)
(74) Representative: Büchner, Jörg

(57) **Abstract**

The invention relates to a vehicle (1) comprising at least one roof impact sensor (4, 5) with a hermetically tight, compressible pressure tube (4.1, 5.1) and with at least one pressure sensor (4.2, 4.3, 5.2, 5.3) configured to measure a pressure inside the pressure tube (4.1, 5.1). The at least one pressure tube (4.1, 5.1) is arranged in a support structure supporting an impact sensing area of the roof (2) of the vehicle (1) such that the impact of an obstacle (7, 7', 7") within the impact sensing area at least partially compresses the pressure tube (4.1, 5.1).

The invention is further related to a method for operating a control unit (6) of a vehicle (1) with at least one such roof impact sensor (4, 5).

## Description

For the protection of passengers in a car, rollover detection systems are known that detect a rollover of a car and subsequently initiate protective measures such as an ignition of airbags, in particularity curtain airbags. Such rollover detection systems prevent injuries of persons inside the car in situations where the car's roof or the mechanical support thereof is damaged as a consequence of a rollover.

Furthermore, pressure based pedestrian protection systems (pPPS) are known from the state of the art. Pedestrian protection systems comprise a sensor that consists of a flexible air tube that is laid across the entire width of the car in its front bumper. The tube is situated directly behind the foam block that is fitted at the front of the vehicle to absorb impact energy. Standardized pressure sensors are installed at either end of the air-filled pressure tube.

When a vehicle collides with an obstacle, the resulting pressure exerted on the tube through the front bumper and foam block creates a typical waveform that is detected by the two sensors at the ends of the tube and forwarded to an airbag control unit. A pedestrian protection algorithm implemented in a controller of the pPPS enables the type of collision to be rapidly identified. The signal propagation time also allows conclusions to be drawn about the location of the impact, for example the front right-hand corner or the middle of the vehicle. Within 10-15 milliseconds of an impact, the active hood of the vehicle is triggered and raised by special actuators. This reduces the risk of death or severe injury to the pedestrian from hitting the hood and underlying engine block.

A vehicle's roof may collapse in case of accidents caused by falling obstacles such as falling branches in case of a storm, falling stones in mountain areas in case of a rockfall or other obstacles such as bill boards or traffic lights. Also, a vehicle may, in a traffic accident, collide with a light pillar or a tree, which subsequently may fall onto the roof of the vehicle.

The collapse of a vehicle's roof may cause severe injuries, for example head or neck injuries, for persons inside the vehicle.

Such a collapse of a vehicle's roof is not detected, and therefore such injuries are not prevented, by protection systems known from the state of the art such as rollover detection systems or pedestrian protection systems. Therefore, protection systems that detect the collapse of a vehicle's car and/or that protect passengers inside the vehicle against injuries resulting from a collapse of a vehicle's roof are needed that operate more reliably, in particularity independent of a rollover of the vehicle, and that provide a better protection for the passengers inside the vehicle.

It is an object of the present invention to provide a vehicle with a roof impact sensor configured to detect an impact on the roof of the vehicle by an obstacle. This object is achieved by a vehicle according to claim 1.

It is a further object of the present invention to provide a method for initiating a protective measure after an impact of an obstacle on the roof of the vehicle. This object is achieved by a method according to claim 6.

A vehicle comprises at least one roof impact sensor with a hermetically tight, compressible pressure tube and with at least one pressure sensor. The at least one pressure sensor is configured to measure a pressure inside the pressure tube.

According to the invention, the at least one pressure tube is at least partially arranged in an support structure supporting an impact sensing area of the roof of the vehicle, such that the impact of an obstacle within the impact sensing area at least partially compresses the pressure tube.

If an obstacle impacts the impact sensing area of the vehicle's roof, the mechanical support structure is damaged and the pressure tube is at least partially compressed. Thereby, a pressure pulse is generated inside the pressure tube. The pressure pulse is registered by the at least one pressure sensor.

By evaluating the pressure value read by the at least one pressure sensor, the impact of the obstacle can be detected independently from a rollover situation. Protective measures can thus be initiated that prevent persons inside the vehicle from injuries as a consequence of an obstacle, such as a tree or a traffic sign, falling upon the vehicle. Thus the safety of the vehicle is improved.

In an embodiment of the invention, the roof impact sensor is formed as a front-side roof impact sensor, wherein the pressure tube is arranged along the supporting structure of the front-side part of the roof, thereby embracing the roof above a driver seat 3 and a front passenger seat. With such an embodiment it is possible to efficiently protect a driver and a front passenger from injuries caused by falling obstacles.

In an embodiment, the vehicle is formed as a passenger car comprising at least one rear passenger seat and comprises a rear-side roof impact sensor with a pressure tube arranged along the supporting structure of the rear-side part of the roof, thereby embracing the roof above the rear passenger seats. With such an embodiment it is possible to efficiently protect a rear passenger from injuries caused by falling obstacles.

In an embodiment, the vehicle is formed as a passenger car and comprises a front-side roof impact sensor and a rear-side roof impact sensor. With such an embodiment, it is possible to detect the location and the severity of an impact more precisely and more comprehensively. It is thus possible to initiate a protective measure that is better adapted to the impact and that spares protective systems that are not needed to prevent injuries.

In an embodiment, a pressure sensor is arranged at each end of a pressure tube. This embodiment is particularly easy to design and manufacture, as pre-configured tubes can be trimmed to form pressure tubes of various lengths. As an example, the ends of a pressure tube with a pressure sensor mounted on each end can be integrated into pillows that form the supporting structure of the vehicle, while the central part of the pressure tube is led along the edge of the roof.

In an embodiment, the vehicle further comprises a control unit connected with the at least one pressure sensor and configured to detect an impact of an obstacle on at least one impact sensing area. The control unit enables more adapted protective measures as it is possible to more precisely evaluate the location and severity of an impact.

According to the invention, a method for operating the control unit connected with the pressure sensors, wherein the control unit compares each pressure value sensed by a pressure sensor against a threshold value and wherein the control unit initiates a protective measure when a pre-determined number of pressure values reach a threshold value.

As an example, such a method may initiate a first protective measure when a single pressure value exceeds a first threshold, thereby indicating a major impact of an obstacle. Such a method may alternatively initiate a modified second protective measure when a certain number of pressure values exceeds a second threshold lower than the first threshold. Such a method may be configured such that the modified second protective measure is initiated when four pressure sensor values exceed the lower second threshold, but is not initiated when only three pressure sensor values exceed the lower second threshold. Thus, a more adapted protective measure is enabled by such a method.

In an embodiment of said method, the first and/or second threshold values are chosen specifically for each pressure sensor. As an example, the first threshold value for initiating a first protective measure of a pressure sensor nearby the driver seat may be chosen different from the first threshold value of a pressure sensor nearby a rear passenger seat.

In an embodiment of said method, a protective measure comprises the tensioning of at least one seat belt and/or the ignition of at least one curtain airbag and/or the adjustment of at least one seat into a protective retracted position. It is possible to choose a protective measure relating to a seat in dependence on the occupancy of the respective seat.

In an embodiment of such a method, the occupancy of at least one seat is detected and a protective measure related to a seat is configured depending on the detected occupancy of this seat. Thereby, unnecessary protective measures or protective measures that potentially pose a risk to persons in the vehicle can be avoided.

The present invention will become more fully understood from the detailed description given hereinbelow and the accompanying drawings which are given by way of illustration only, and thus, are not limitive of the present invention, and wherein:
- Figure 1: is a schematic perspective view on a vehicle,
- Figure 2: is a schematic topview on a vehicle roof,
- Figure 3: is a schematic topview on a vehicle roof with an impacted medium-size obstacle,
- Figure 4: is a schematic topview on a vehicle roof with an impacted large-size obstacle and
- Figure 5: is a schematic side view on a vehicle seat.

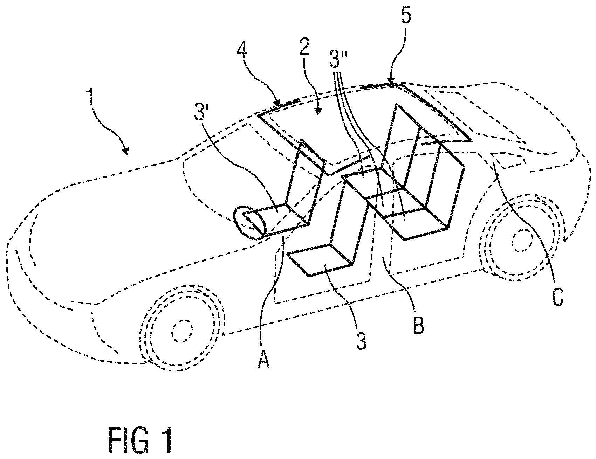

Figure 1 is a schematic view on a vehicle 1 comprising a vehicle roof 2 and a driver seat 3, a front passenger seat 3' and plurality of rear passenger seats 3". A front-side roof impact sensor 4 and a rear-side roof impact sensor 5 are integrated into the vehicle roof 2. The roof 2 is supported by a front-side A-pillar A, by a rear-side C-pillar C and by a B-pillar B in between the A-pillar A and the C-pillar C.

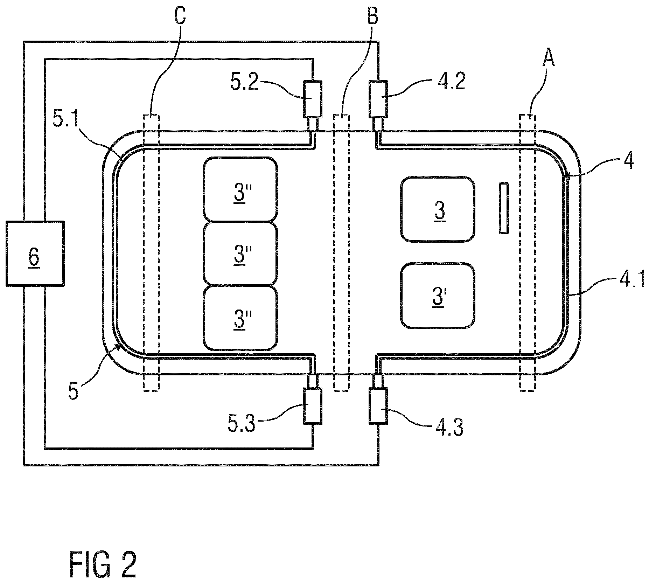

As shown in more detail in figure 2, the front-side roof impact sensor 4 is arranged along the edges of the front-side part of the roof 2 and the A-pillar A, thereby embracing the roof 2 above the driver seat 3 and the front passenger seat 3'. Approximately mirrored at the B-pillar B, the rear-side roof impact sensor 5 is arranged along the edges of the rear-side part of the roof 2 and the C-pillar C, thereby embracing the roof 2 above the rear passenger seats 3".

In an embodiment, a pressure sensor 4.2, 4.3, 5.2, 5.3 is arranged in either of the pillars A, B, C. As an example, the pressure sensors 4.2, 4.3, 5.2, 5.3 may be arranged inside the B-pillar B.

Each of the roof impact sensors 4, 5 comprises a pressure tube 4.1, 5.1. Each pressure tube 4.1, 5.1 pneumatically connects pressure sensors 4.2, 4.3 and 5.2, 5.3, respectively, with one pressure sensor 4.2, 4.3, 5.2, 5.3 arranged on each end of the pressure tubes 4.1, 5.1.

The pressure tubes 4.1, 5.1 are gas-filled and hermetically tight with a deformable tubular outer support structure. Such pressure tubes 4.1, 5.1 are known from Pedestrian Protection Systems.

According to the invention, the pressure tubes 4.1, 5.1 of the roof impact sensors 4, 5 are arranged on the vehicle roof 2. An impact upon the roof 2 will thus, at least in part, compress the deformable outer support structure of at least one of the pressure tubes 4.1, 5.1, thereby creating a pressure pulse that is detected by at least one of the pressure sensors 4.2, 4.3, 5.2, 5.3 arranged at the ends of the impacted pressure tubes 4.1, 5.1.

The signals of the pressure sensors 4.2, 4.3, 5.2, 5.3 are received and evaluated by a control unit 6. An abrupt pressure pulse detected by one or more pressure sensors 4.2, 4.3, 5.2, 5.3 can thus be recognized by the control unit 6 as an impact on the roof 2 of the car 1. Depending on the magnitude, the spatial distribution of the at least one detected pressure pulses and/or the lag between a plurality of pressure pulses, the control unit 6 initiates protective measures such as lowering one or more seats 3, 3', 3", which will be described in more detail later on.

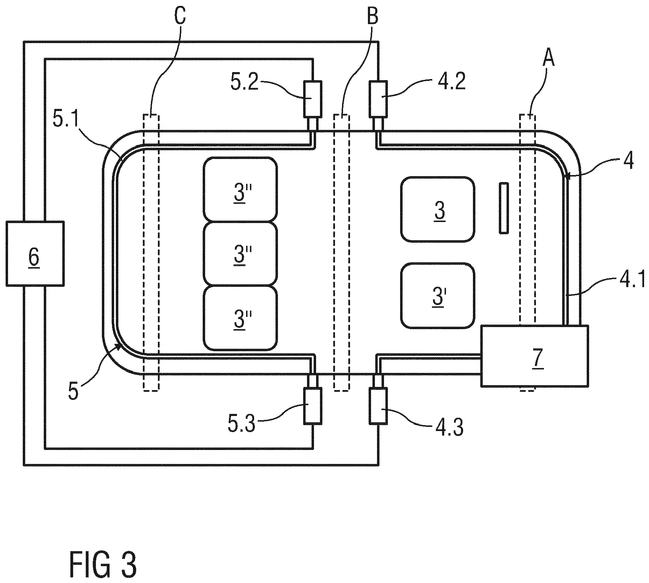

Figure 3 schematically illustrates a situation following an impact of an obstacle 7 of small or medium size footprint such as a smaller stone, a branch or a metal part upon the roof 2 nearby the front passenger seat 3'. The impact affects the front-side roof impact sensor 4 with a larger pressure pulse detected at the pressure sensor 4.3 at the near end of the pressure tube 4.1 and a smaller and more delayed pressure pulse detected at the far end of the pressure tube 4.1. The rear-side roof impact sensor 5 is not affected by the impact.

In the situation as illustrated by Figure 3, the control unit 6 receives a large pressure pulse signal from the pressure sensor 4.3 nearby the front passenger seat 3', a comparatively low and delayed pressure pulse signal from the pressure sensor 4.2 nearby the driver seat 3 and no pressure pulse signal from the pressure sensors 5.2, 5.3 of the rear-side roof impact sensor 5.

The control unit 6 is configured such that the impact of the obstacle 7 is classified as of minor or moderate concern. As an example, the control unit 6 can compare the pressure pulse signals against a pre-determined threshold value. If just one of the pressure pulse signals exceeds the threshold value, a moderate concern impact is classified. In a similar way, a more precise classification is possible by comparing pressure pulse signals against a plurality of pre-determined threshold values, wherein a threshold value may specifically be determined for a specific position of a pressure sensor 4.2, 4.3, 5.2, 5.3.

The control unit 6 is further configured such that no protective measures are initiated in a situation of minor or moderate concern. Alternatively, the control unit 6 may be configured such that limited protective measures are initiated in a situation of moderate concern, e.g. protective measures that protect a single seat 3' closest to the detected impact of the obstacle 7.

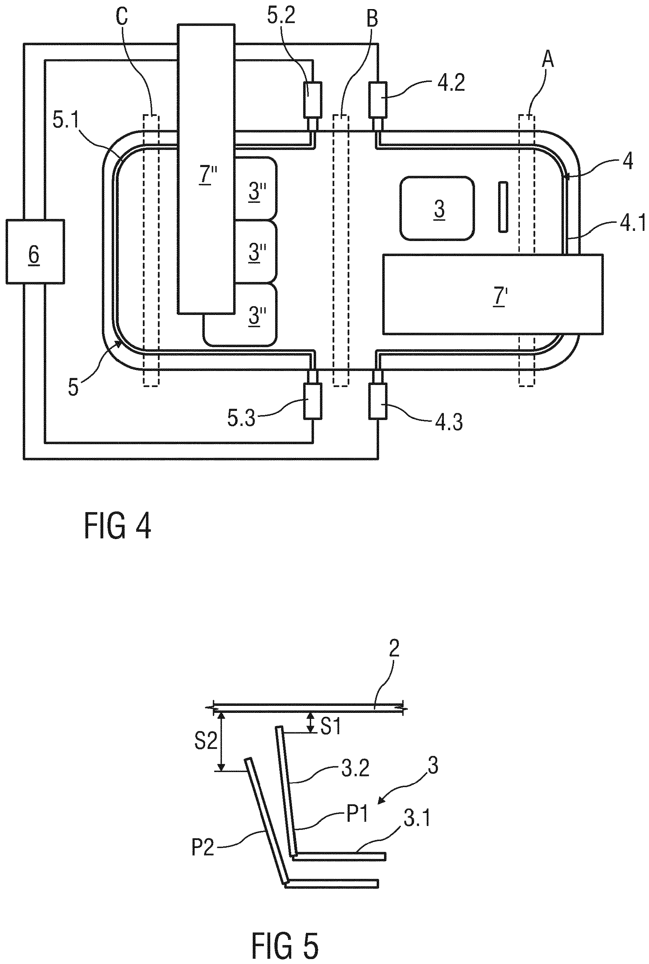

Figure 4 schematically illustrates a situation following an impact of obstacles 7', 7" with an extended footprint. As more extended obstacles 7', 7" deform either or both of the pressure tubes 4.1, 5.1 along a greater length, pressure pulses of higher amplitude are recognised at a plurality of pressure sensors 4.2, 4.3, 5.2, 5.3.

The control unit 6 is configured such that such a situation is classified as a critical or major concern impact, wherein protective measures are initiated for at least one of the seats 3, 3', 3". The control unit 6 may be configured such that different protective measures are initiated for different seats 3, 3', 3" depending on the distribution of the amplitudes of pressure pulses at all pressure sensors 4.2, 4.3, 5.2, 5.3 and depending on further sensor systems.

As an example, seat belts may be fastened for all seats 3, 3', 3" and all curtain airbags may be ignited, but a seat 3, 3', 3" may be retracted only when a passenger is detected that occupies the seat 3, 3', 3" and when a pressure pulse exceeding a pre-determined critical threshold is registered by a pressure sensor 4.2, 4.3, 5.2, 5.3 nearby the respective seat 3, 3', 3".

Figure 5 illustrates the retreat of a seat 3 in more detail. The seat 3 comprises a seating 3.1 and a back rest 3.2.
In a regular position P1, the seat 3, 3', 3" provides comfort and overview to the passenger or driver occupying the seat 3, 3', 3" . In the regular position P1, a regular headroom S1 is provided between the upper end of the backrest or headrest of the seat 3, 3', 3" and the inner face of the roof 2. In the regular position P1 the back rest 3.2 is in a substantially upright position.

When a critical impact of a major-size obstacle on the roof 2 is detected by the control unit 6, the seat 3, 3', 3" is retracted into a retracted position P2. In particularity, the seating 3.1 is lowered and the back rest 3.2 is inclined towards a more horizontal inclination.

Thereby, an enlarged headroom S2 is provided between the upper end of the backrest or headrest of the seat 3, 3', 3" and the inner face of the roof 2. Thus, the risk of potential injuries of the passenger on the seat 3, 3', 3" is reduced.

### Reference list

- 1: vehicle
- 2: roof
- 3: driver seat, seat
- 3.1: seating
- 3.2: back rest
- 3': front passenger seat, seat
- 3": rear passenger seat, seat
- 4: roof impact sensor
- 4.1: pressure tube
- 4.2, 4.3: pressure sensor
- 5: roof impact sensor
- 5.1: pressure tube
- 5.2, 5.3: pressure sensor
- 6: control unit
- 7, 7', 7": obstacle

- A: A-pillar
- B: B-pillar
- C: C-pillar
- P1: regular position
- P2: retracted position
- S1: regular headroom
- S2: enlarged headroom

## Claims

1. Vehicle (1) comprising at least one roof impact sensor (4, 5) with a hermetically tight, compressible pressure tube (4.1, 5.1) and with at least one pressure sensor (4.2, 4.3, 5.2, 5.3) configured to measure a pressure inside the pressure tube (4.1, 5.1),
**characterised in that** the at least one pressure tube (4.1, 5.1) is arranged in a support structure supporting an impact sensing area of the roof (2) of the vehicle (1) such that the impact of an obstacle (7, 7', 7") within the impact sensing area at least partially compresses the pressure tube (4.1, 5.1).

2. Vehicle (1) according to claim 1 comprising a front-side roof impact sensor (4),
**characterised in that** the pressure tube (4.1) of the front-side roof impact sensor (4) is arranged along the supporting structure of the front-side part of the roof (2), thereby embracing the roof (2) above a driver seat (3) and/or a front passenger seat (3').

3. Vehicle (1) according to claim 1 or 2 comprising a rear-side roof impact sensor (5),
**characterised in that** the vehicle (1) is a passenger car comprising at least one rear passenger seat (3"), wherein the pressure tube (5.1) of the rear-side roof impact sensor (5) is arranged along the supporting structure of the rear-side part of the roof (2), thereby embracing the roof (2) above the at least one rear passenger seat (3").

4. Vehicle (1) according to any of the previous claims,
**characterised in that** a pressure sensor (4.2, 4.3, 5.2, 5.3) is arranged at each end of a pressure tube (4.1, 5.1).

5. Vehicle (1) according to any of the previous claims,
**characterised in that** the vehicle (1) further comprises a control unit (6) connected with the at least one pressure sensor (4.2, 4.3, 5.2, 5.3) and configured to detect an impact of an obstacle (7, 7', 7") on at least one impact sensing area.

6. Method for operating the control unit (6) of a vehicle (1) according to claim 5,
**characterised in that** the control unit (6) compares each pressure value sensed by a pressure
sensor (4.2, 4.3, 5.2, 5.3) against a threshold value, wherein the control unit (6) initiates at least one protective measure when a pre-determined number of pressure values reaches a threshold value.

7. Method according to claim 6,
**characterised in that** the threshold value is chosen individually for each pressure sensor (4.2, 4.3, 5.2, 5.3).

8. Method according to claim 6 or 7,
**characterised in that** a protective measure comprises seat belt tensioning of at least one seat (3, 3', 3") and/or seat adjustment of at least one seat (3, 3', 3") and/or at least one curtain airbag ignition.

9. Method according to claims 6 to 8,
**characterised in that** the occupancy of at least one seat (3, 3', 3") is detected and a protective measure related to a seat (3, 3', 3") is configured depending on the detected occupancy of this seat (3, 3', 3").
